# EUROPÄISCHE PATENTSCHRIFT

(11) **EP 1 890 837 B1**
(45) Veröffentlichungstag und Bekanntmachung des Hinweises auf die Patenterteilung: **27.07.2016**
(21) Anmeldenummer: 06742895.3
(22) Anmeldetag: 12.05.2006
(51) Int. Cl.: B23K 31/02, B23K 1/00

(54) **FÜGEN METALLISCHER DRAHTFILAMENTEN ZU VLIESEN ZUR HERSTELLUNG VON WABENKÖRPERN**
JOINING METAL WIRE FILAMENTS TO NONWOVEN STRUCTURES FOR PRODUCING HONEY-COMB BODIES
ASSEMBLAGE DE FILAMENTS METALLIQUES EN NAPPES POUR LA PRODUCTION DE CORPS EN NIDS D'ABEILLES

(30) Priorität: 17.05.2005 DE 102005023385
(43) Veröffentlichungstag der Anmeldung: 27.02.2008
(73) Patentinhaber: Continental Automotive GmbH, 30165 Hannover (DE)
(72) Erfinder: BRÜCK, Rolf, 51429 Bergisch Gladbach (DE); HIRTH, Peter, 51503 Rösrath (DE)
(86) Internationale Anmeldenummer: PCT/EP2006/004483
(87) Internationale Veröffentlichungsnummer: WO 2006/122719

(56) Entgegenhaltungen:
- GB-A- 804 354
- GB-A- 948 529
- GB-A- 1 452 982
- US-A- 5 873 918
- US-A1- 2002 100 167
- US-B1- 6 329 625
- US-B1- 6 585 151
- PATENT ABSTRACTS OF JAPAN Bd. 017, Nr. 638 (C-1133), 26. November 1993 (1993-11-26) & JP 05 200304 A (USUI INTERNATL IND CO LTD), 10. August 1993 (1993-08-10)

## Beschreibung

Die vorliegende Erfindung betrifft ein Verfahren zur Herstellung eines Vlieses umfassend metallische Drahtfilamente, sowie ein Verfahren zur Herstellung eines Wabenkörpers aufweisend zumindest ein Vlies (siehe z.B. US-A-6585151).

Metallische Faservliese werden beispielsweise als Filtermaterial für Abgase von stationären und mobilen Verbrennungskraftmaschinen eingesetzt. Sie dienen insbesondere zum Zurückhalten von im Abgas enthaltenen Partikeln (Asche, Ruß, etc.), wobei diese Partikel zumindest teilweise mit dem Faservlies zurückgehalten und, gegebenenfalls unter Einsatz eines Katalysators, chemisch umgewandelt werden. Aufgrund der hohen thermischen und dynamischen Belastung der Faservliese, gerade in Abgassystemen von mobilen Verbrennungskraftmaschinen von z.B. Fahrzeugen, Booten, etc. sind besondere Anforderungen an ein solches Faservlies hinsichtlich der Dauerfestigkeit zu stellen, insbesondere ist eine dauerhafte Verbindung der Fasern miteinander erforderlich.

Die Herstellung solcher Faservliese erfolgt beispielsweise durch Verschweißen oder durch die Ausbildung von Sinterverbindungen zwischen den Drahtfilamente.

Bei der Herstellung der Vliese ist zu berücksichtigen, dass diese unter Umständen noch mit weiteren Bauteilen zusammengefügt werden müssen, um schließlich eine Abgasbehandlungseinrichtung zu bilden. Hierzu ist es gelegentlich erforderlich, dem Faservlies eine bestimmte Form zu geben. Die gewünschte Formgebung wird jedoch durch die ausgebildeten Verbindungen der Fasern untereinander behindert, so dass sich im Hinblick auf die Herstellung solcher Abgasbehandlungseinheiten beachtliche Schwierigkeiten bei der Serienfertigung ergeben haben. So sind zusätzliche und besonders gestaltete Handhabungswerkzeuge erforderlich, die aufgrund der schlechten Formbarkeit der glatten Faservliese zudem einem erhöhten Verschleiß unterliegen. Zudem besteht die Gefahr, dass das Faservlies unkontrollierbar an verschiedenen Stellen reißt, wobei sich unter Umständen Fasern später im Abgassystem lösen.

Aufgabe der vorliegenden Erfindung ist es, die mit Bezug auf den Stand der Technik geschilderten technischen Probleme zumindest teilweise zu lindern. Insbesondere ist es Aufgabe, ein Herstellungsverfahren für ein metallisches Vlies anzugeben, dass eine einfache Serienfertigung auch von Abgasbehandlungseinheiten ermöglicht. Weiterhin soll ein Verfahren zur Herstellung eines Wabenkörpers angegeben Werden, wobei hierfür ein metallisches Vlies eingesetzt wird, dass auch im Hinblick auf eine Serienfertigung einer präzisen Formgebung unterzogen werden kann.

Diese Aufgaben werden gelöst mit einem Verfahren zur Herstellung eines Vlieses mit den Merkmalen des Patentanspruchs 1 sowie einem Verfahren zur Herstellung eines Wabenkörpers mit den Merkmalen des Patentanspruchs 6 Weitere vorteilhafte Ausgestaltungen der Erfindung sind in den abhängig formulierten Patentansprüchen beschrieben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen.

Das erfindungsgemäße Verfahren zur Herstellung eines Vlieses mit metallischen Drahtfilamenten umfasst zumindest folgende Schritte:
a) Bilden einer Lage mit Drahtfilamenten, wobei nach keine stoffschlüssigen Verbindungen der Drahtfilamente vorliegen;
b) Erzeugen von ersten stoffschlüssigen Verbindungen zwischen zumindest einem Teil der metallischen Drahtfilamente mit einem ersten Fügeverfahren;
c) Erzeugen von zweiten stoffschlüssigen Verbindungen zwischen metallischen Drahtfilamenten mit einem zweiten Fügeverfahren.

Mit einem "Vlies" ist insbesondere ein flächiges Gebilde gemeint, wobei die das Vlies bildenden Drahtfilamente geordnet oder wirr zueinander angeordnet sein können. Beispiele für ein Vlies sind Gewebe, Gitterstrukturen, Gestricke, Wirrlagen, etc.. Das Vlies kann grundsätzlich auch mindestens einen Zusatzstoff umfassen, wie z.B. andersartige Vliese, Pulver oder dergleichen, wobei dieser letztendlich mit dem Vlies unverlierbar verbunden ist. Das Vlies wird mit Drahtfilamenten gebildet, die aus einem hochtemperaturfesten und korrosionsbeständigen Material sind. Das "Drahtfilament" stellt insbesondere eine Bezeichnung für ein lang gestrecktes Element dar und umfasst insbesondere auch drahtförmige, spanförmige und ähnliche Elemente. Die metallischen Drahtfilamente umfassen insbesondere ein Material, dass im Wesentlichen Stahl als Grundwerkstoff umfasst, wobei bevorzugt hohe Anteile von Chrom (z.B. in einem Bereich von 18 bis 21 Gew.%) und/oder Aluminium (z.B. mindestens 4,5 Gew.%, insbesondere mindestens 5,5 Gew.%) vorgesehen sind. Grundsätzlich sind auch aluminierte Drahtfilamente einsetzbar. Diese metallischen Drahtfilamente sind bevorzugt mit einer Filamentlänge im Bereich von 0,1 bis 50 mm (insbesondere in einem Bereich von 1 bis 10 mm) und einem Filamentdurchmesser im Bereich von 0,01 bis 0,1 mm (insbesondere in einem Bereich von 0,02 bis 0,05 mm) ausgeführt. Das Flächengewicht eines solchen Vlieses liegt bevorzugt im Bereich von 750 bis 1.500 g/m². Die Porosität des herzustellenden Vlies liegt bevorzugt in einem Bereich von 30% bis 80%, insbesondere in einem Bereich von 45% bis 60%.

Gemäß Schritt a) wird zunächst eine Lage mit Drahtfilamenten gebildet. Damit ist insbesondere gemeint, dass die Drahtfilamente in einem lockeren Verbund aneinander bzw. aufeinander angeordnet werden. Dazu werden die Drahtfilamente (wirr oder orientiert) beispielsweise auf einer Unterlage abgelegt, so dass die Drahtfilamente miteinander kontaktiert sind. Dabei wird die Lage solange gebildet, bis eine gewünschte Lagendicke, ein bestimmtes Lagengewicht und/oder eine gewünschte Porosität vorliegt. Die Lage stellt damit die Ausgangskomponente für das Vlies dar, wobei noch keine stoffschlüssigen Verbindungen der Drahtfilamente vorliegen.

In Schritt b) werden zwischen zumindest einem Teil der metallischen Drahtfilamente mit einem ersten Fügeverfahren erste stoffschlüssige Verbindungen erzeugt. Die ersten stoffschlüssigen Verbindungen sind dabei so ausgeführt, dass das Vlies noch gut formbar ist, insbesondere noch spiralförmig gewickelt, Sförmig gewunden oder in ähnlicher Weise umgeformt werden kann. Bevorzugt ist die Mehrheit der metallischen_Drahtfilamente durch das erste Fügeverfahren bereits miteinander verbunden, bevorzugt mindestens 80% der Drahtfilamente. Weiter ist bevorzugt, dass mindestens ein Teil der metallischen Drahtfilamente mehrere erste stoffschlüssige Verbindungen hin zu benachbarten Drahtfilamenten aufweist, wobei dies insbesondere für mindestens 40% der Drahtfilamente gelten soll. Ganz besonders bevorzugt ist die Ausführung des Schrittes b), wobei stoffschlüssige Verbindungen bezüglich einem metallischen Drahtfilament nur in einem Teilbereich des Drahtfilaments gebildet werden, der deutlich kleiner als die Filamentlänge ist, beispielsweise sind diese ersten stoffschlüssigen Verbindungen nur in einem Teilbereich ausgebildet, der kleiner als 20% (insbesondere kleiner 5%) der Filamentlänge ist.

Bei einer solchen Ausgestaltung der ersten stoffschlüssigen Verbindungen sind nur eine verhältnismäßig geringe bzw. reduzierte Anzahl von das Vlies versteifende stoffschlüssige Verbindungen bzw. Verbindungspunkte gegeben, so dass einerseits gewährleistet ist, dass das Vlies transportabel und sogar auch umformbar ist, anderseits aber auch die Gefahr betreffend einer unzureichenden Verankerung bzw. Fixierung eines wesentlichen Anteils der Drahtfilamente vermieden wird. Das erste Fügeverfahren ist bevorzugt eines aus der Gruppe der Fertigungsverfahren betreffend das Fügen durch Schweißen und das Fügen durch Löten. Grundsätzlich kann dabei mit oder ohne Zusatzwerkstoff gearbeitet werden.

In einem weiteren Schritt c), werden nun zweite stoffschlüssige Verbindungen zwischen den metallischen Drahtfilamenten mit einem zweiten Fügeverfahren erzeugt. Mit anderen Worten bedeutet dies insbesondere, dass die Ausbildung der ersten und zweiten stoffschlüssigen Verbindungen örtlich und zeitlich getrennt stattfindet. Während des zweiten Fügeverfahrens werden zusätzliche zweite stoffschlüssige Verbindungen bzw. Verbindungspunkte generiert, die zu einer weiteren Versteifung des Vlieses führen. Insbesondere liegt nach Schritt b) eine erste Biegesteifigkeit (maximal auftretende Kraft bei Biegung des Vlieses (Breite: 50 mm) bis zu einem Biegewinkel von 90° mit einer freien Biegelänge von 20 mm) vor, die deutlich kleiner als eine zweite Biegesteifigkeit nach Durchführung des Schrittes c), wobei die zweite Biegesteifigkeit bevorzugt um mindestens 50%, insbesondere 100% größer als die erste Biegesteifigkeit ist. Da der absolute Wert der Biegesteifigkeit von der konkreten Ausgestaltung des Vlieses abhängt, kann hier nur beispielhaft (0,3 mm Vliesdicke, 0,022 mm Filamentdurchmesser, 85% Porosität) ein Wert für die Biegesteifigkeit angegeben werden: die erste Biegesteifigkeit liegt hierbei in einem Bereich von 600 bis 1.200 mN und bevorzugt unter 1.000 mN, während nach Schritt c) z.B. eine zweite Biegesteifigkeit von mindestens 1.500 mN gegeben ist. Nach Schritt c) weisen bevorzug mindestens 90% aller Drahtfilamente wenigstens eine erste und/oder wenigstens eine zweite stoffschlüssige Verbindung auf.

Mit dem hier vorgeschlagenen Verfahren wird ein zweistufiges Generieren der gewünschten Vlieseigenschaft im Hinblick auf deren strukturelle Integrität vorgeschlagen. Dies eröffnet die Möglichkeit, dass das Vlies zunächst in einen gut formbaren Zustand gebracht wird, dann in seine endgültige Form umgeformt wird und schließlich in einem nachfolgenden Fügeverfahren seine letztendlich gewünschte Steifigkeit erhält. Dies erlaubt beispielsweise die Herstellung von strukturierten Vliesen, die letztendlich dauerhaft den hohen dynamischen und thermischen Belastungen im Abgassystem mobiler Verbrennungskraftmaschinen standhalten können.

Weiter wird vorgeschlagen, dass zur Durchführung des Schrittes b) als erstes Fügeverfahren ein Schweißverfahren eingesetzt wird. Ganz besonders bevorzugt werden zur Ausbildung der ersten stoffschlüssigen Verbindungen WiderstandsSchweißverfahren eingesetzt. Als besonders geeignet hat sich dabei das so genannte Rollnahtschweißen herausgestellt, bei dem wenigstens zwei rollenartige Elektroden beidseits des Vlieses angeordnet sind. Durch Anlegen einer Spannung an den Elektroden und deren Kontakt mit der Drahtfilamentlage werden stoffschlüssige Verbindungen der metallischen Drahtfilamente untereinander ausgebildet. Auf Grund der räumlich begrenzten Einwirkzone des Schweißverfahrens werden auch nur in relativ lokal begrenzten Teilgebieten der Lage bzw. des Vlieses erste stoffschlüssige Verbindungen generiert. Damit kann die gewünschte Vlieseigenschaft zur weiteren Behandlung des Vlieses gezielt eingestellt werden.

Nach einer weiteren Ausgestaltung des Verfahrens wird vorgeschlagen, zur Durchführung des Schrittes c) als zweites Fügeverfahren eine Hochtemperaturbehandlung des Vlieses zur Ausbildung von Sinterverbindungen einzusetzen. Ganz besonders bevorzugt wird das Vlies hierbei einer Temperatur oberhalb von 800°C, insbesondere größer 1.100°C, ausgesetzt. Die Umgebung des Vlieses kann dabei mit einem Vakuum und/oder Schutzgas-Atmosphäre ausgeführt sein. Die zweiten stoffschlüssigen Verbindungen sind insbesondere durch so genannte Sinterhälse gekennzeichnet, die durch die Oberflächendiffusion zwischen den metallischen Drahtfilamenten entstehen. Üblicherweise sind die zweiten stoffschlüssigen Verbindungen im Bereich des Kontaktes von benachbart fixierten Drahtfilamenten positioniert.

Gemäß einer weiteren Verfahrensausgestaltung umfasst Schritt b) das Ausbilden eines Verbindungsplanes, so dass mindestens eine anisotrope Vlieseigenschaft erzeugt wird. Unter einer "anisotropen" Ausgestaltung einer Eigenschaft ist insbesondere zu verstehen, dass sich die Ausprägung dieser Eigenschaft in unterschiedlichen Richtungen des Vlieses betrachtet signifikant unterscheidet. Das heißt beispielsweise, dass das Vlies nach Schritt b) in einer Richtung biegesteif und in einer anderen Richtung biegeweich ausgeführt ist. Um dies zu erreichen wird die Ausbildung eines Verbindungsplanes vorgeschlagen. Unter einem "Verbindungsplan" ist eine vorgegebene Anordnung von Zonen erster stoffschlüssiger Verbindungen gemeint. Dieser Verbindungsplan kann mehrere definiert zueinander angeordnete Zonen erster stoffschlüssiger Verbindungen umfassen, so dass diese eine Art Muster bilden. Der Verbindungsplan kann mit mehreren zumindest teilweise zueinander parallelen und/oder sich zumindest teilweise kreuzenden Zonen ausgebildet sein. Die explizite Ausgestaltung des Verbindungsplanes hängt im Wesentlichen von der noch gewünschten Art der Umformung des Vlieses ab. Durch die unterschiedliche Ausgestaltung des Verbindungsplanes können insbesondere folgende Vlieseigenschaften anisotrop ausgeführt werden: Biegesteifigkeit, Festigkeit, Kaltumformbarkeit, Zugfestigkeit.

Nach einer weiteren Ausgestaltung des Verfahrens wird zwischen Schritt b) und Schritt c) mindestens einer der folgenden Schritte durchgeführt:
- Transportieren des Vlieses,
- Umformung des Vlieses,
- Beschichten des Vlieses.

Beim Transportieren des Vlieses wird das Vlies beispielsweise von einer Unterlage entfernt oder mitsamt der Unterlage an einen anderen Ort gebracht. Dabei ist auch möglich, dass das Vlies zumindest teilweise elastisch verformt wird, gedreht wird, etc. Das Umformen des Vlieses umfasst beispielsweise das Einbringen von Öffnungen, ein Wickeln des Vlieses, das Winden und/oder das Strukturieren des Vlieses. Bevorzugt wird beim Umformen des Vlieses eine dauerhafte, plastische Verformung des flächenförmigen Gebildes hin zu einem komplexeren Gebilde bewirkt, beispielsweise nach Art einer Spirale, eines Zylinders, mit einer Well- oder Zick-Zack-Form, etc.. Das Beschichten des Vlieses kann das Applizieren eines Zusatzstoffes umfassen, wobei dieser Zusatzstoff temporär oder permanent an dem Vlies fixiert wird. Eine temporäre Beschichtung könnte beispielsweise die Befestigung eines Klebstoffes zur Fixierung weiterer Komponenten oder eines Pulvers (Lot, Filtermaterial, etc.) umfassen. Ein Beispiel für eine dauerhafte Beschichtung ist das Auftragen eines Zusatzmaterials mit mindestens einem Legierungselement, welches zumindest teilweise in die Oberfläche des Vlieses eingebracht wird, ggf. gleichzeitig mit der Durchführung des Schrittes c).

Entsprechend einem weiteren Aspekt der Erfindung wird ein Verfahren zur Herstellung eines Wabenkörpers aufweisend zumindest ein Vlies mit einer Vielzahl metallischer Drahtfilamente vorgeschlagen, welches zumindest folgende Schritte umfasst:
w) Bilden einer Lage aus Drahtfilamenten, wobei noch keine stoffschlüssigen Verbindungen der Drahtfilamente vorliegen;
x) Erzeugen von ersten stoffschlüssigen Verbindungen zwischen zumindest einem Teil der metallischen Drahtfilamente mit einem ersten Fügeverfahren;
y) Anordnen mindestens eines Vlieses zu einem Wabenkörper,
z) Erzeugen von zweiten stoffschlüssigen Verbindungen zwischen metallischen Drahtfilamenten mit einem zweiten Fügeverfahren.

Ein Wabenkörper ist insbesondere dadurch gekennzeichnet, dass er mit einer Vielzahl von, üblicherweise im Wesentlichen parallel zueinander angeordneten, Kanälen ausgeführt ist, die zumindest teilweise für ein Fluid durchströmbar sind. Solche Wabenkörper werden beispielsweise zur Entfernung von Schadstoffen aus Abgasen mobiler Verbrennungskraftmaschinen eingesetzt. Die Wabenkörper dienen beispielsweise als Träger für eine katalytisch aktive Beschichtung und/oder als Partikelfalle. Zum Aufbau der Wabenstruktur ist hier zumindest ein Vlies mit einer Vielzahl metallischer Drahtfilamente vorgesehen. Im Hinblick auf die Herstellung des Drahtfilament-Vlieses (Schritte w) und x)) sei auf die oben angeführten Erläuterungen zu den Schritten a) und b) verwiesen.

Nachdem nun die ersten stoffschlüssigen Verbindungen erzeugt wurden, findet gemäß Schritt y) nun der Verfahrensschritt des Anordnens mindestens eines Vlieses zu einem Wabenkörper statt. Das Anordnen umfasst dabei beispielsweise das Unformen des Vlieses, das Ausrichten des Vlieses zu weiteren Komponenten des Wabenkörpers (wie beispielsweise zusätzliche Blechfolien), das Integrieren des Vlieses in ein Gehäuse, und dergleichen. Bevorzugt wird Schritt y) so durchgeführt, dass die gewünschte Gestalt des Wabenkörpers mit dem mindestens einem Vlies vorliegt und in Schritt z) schließlich noch die gewünschte Dauerfestigkeit bzw. Steifigkeit des Vlieses bzw. des Wabenkörpers verwirklicht wird.

Dabei ist besonders vorteilhaft, das bei Schritt y) der Zusammenbau des mindestens einen Vlieses mit anderen metallischen Komponenten umfasst ist, und während Schritt z) auch stoffschlüssige Verbindungen zwischen zumindest einen Teil der Komponenten ausgebildet werden. Weitere metallische Komponenten, die Teil eines Wabenkörpers sein können, sind beispielsweise ein metallisches Gehäuse, mindestens eine (ebenfalls Kanäle zumindest teilweise begrenzende) Metallfolie sowie metallische Verbindungselemente, die z.B. eine Verbindung von mehreren Vliesen miteinander ermöglichen und/oder zumindest einen Teil der Kanäle des Wabenkörpers verschließen. Im Zusammenhang mit Schritt y) ist insbesondere das abwechselnde Stapeln eines glatten Vlieses und einer gewellten Metallfolie gemeint, die anschließend zu einem Wabenkörper gewickelt und/oder gewunden werden. Dieser Verbund aus Metallfolie und Vlies wird nachfolgend in ein Gehäuse eingesetzt, wobei dies mit einer solchen Vorspannung stattfindet, dass der Verbund aus Vlies und Metallfolie temporär fixiert ist. In dieser Anordnung der Komponenten zueinander erfolgt dann die Ausbildung zweiter stoffschlüssiger Verbindungen während des Schrittes z).

In diesem Zusammenhang ist es auch vorteilhaft, dass Schritt z) einen Lötprozess (so genanntes "Hartlöten") bei Temperaturen oberhalb von 800°C unter Vakuum umfasst. Dabei ist es vorteilhaft, zumindest Teilbereiche der Komponenten mit einem Lötmaterial zu versehen, welches nun weitere stoffschlüssige Verbindungen zwischen zumindest einem Teil der Komponenten ausbildet Damit wird während Schritt z) einerseits das Vlies durch die Ausbildung zweiter stoffschlüssiger Verbindungen der Drahtfilamente untereinander versteift und gleichzeitig eine Verbindung zwischen den Komponenten erzeugt. Der hier beschriebene Hartlöt-Prozess findet bevorzugt bei Temperaturen oberhalb von 1.000°C statt. Auch mittels diesem Verfahrensschritt wird die Qualität bzw. Festigkeit der Verbindungen verbessert.

Das Vlies kann eine Vielzahl von metallischen Drahtfilamenten aufweisen, wobei ein Teil der Drahtfilamente gemäß einem Verbindungsplan stoffschlüssig miteinander verbunden ist, wobei der Verbindungsplan mit mehreren zumindest teilweise zueinander parallelen und/oder sich zumindest teilweise kreuzenden Zonen ausgebildet ist, so dass das Vlies wenigstens eine anisotrope Vlieseigenschaft aufweist. Im Hinblick auf die Anisotropie sei auf die vorstehenden Erläuterungen verwiesen. Die wenigstens eine Vlieseigenschaft umfasst zumindest eine der folgenden Eigenschaften des Vlieses: Biegesteifigkeit, Festigkeit, Kaltumformbarkeit, Zufestigkeit.

Dabei wird hier insbesondere davon ausgegangen, dass die Drahtfilamente zueinander wirr angeordnet sind. Grundsätzlich ist es möglich, das Vlies auch mit orientierten bzw. geordneten Drahtfilamenten zu bilden, so dass beispielsweise durch deren Anordnung bereits eine Anisotropie gegeben ist. Bevorzugt ist hier doch ein Vlies, bei dem die Drahtfilamente wirr zueinander angeordnet sind und die Anisotropie durch speziell ausgebildete erste stoffschlüssige Verbindungen erzeugt wurde. Demnach ist das Vlies insbesondere nach dem vorstehenden, erfindungsgemäß beschriebenen Verfahren herzustellen.

Das Vlies kann in einem Wabenkörper verwendet werden, wobei der Wabenkörper eine Mehrzahl von Kanälen umfasst, die mindestens teilweise mit einem Vlies der vorstehend beschriebenen Art gebildet sind. Bevorzugt dient dabei ein einzelnes Vlies zur Begrenzung mehrerer Kanäle, bei einem spiraligen Aufbau des Wabenkörpers ist es sogar möglich, dass ein einzelnes Vlies zumindest teilweise alle Kanäle teilweise begrenzt.

Ein solcher Wabenkörper kann in einer Vorrichtung zur Abgasbehandlung eingesetzt werden, die von dem zu reinigenden Abgas durchströmt wird, wobei sich in bzw. an dem Vlies zumindest teilweise feste Partikel anlagern. Diese Vorrichtung ist bevorzugt als Filter bzw. Partikelfalle ausgeführt.

Es kann auch ein Fahrzeug, umfassend eine Verbrennungskraftmaschine mit mindestens einer solchen Vorrichtung der vorstehenden Art versehen werden. Bei dem Fahrzeug handelt es sich bevorzugt um einen Lastkraftwagen oder Personenkraftwagen, wobei die Vorrichtung in dessen Abgassystem integriert ist. Die Verbrennungskraftmaschine ist beispielsweise ein Ottomotor oder ein Dieselmotor.

Die Erfindung sowie das technische Umfeld werden an Hand der Figuren näher erläutert. Die Figuren zeigen auch besonders bevorzugte Ausführungsbeispiele der Erfindung, auf die die Erfindung jedoch nicht begrenzt ist. Die Figuren sind schematischer Natur und können regelmäßig nicht zur Veranschaulichung von Größenverhältnissen dienen. Es zeigen:
- Fig. 1:: eine perspektivische Darstellung einer ersten Ausführungsvariante eines Vlieses;
- Fig. 2:: eine Detailansicht des Vlieses aus Fig. 1;
- Fig. 3:: den Ablauf einer ersten Herstellungsvariante für ein Vlies;
- Fig. 4:: eine Detailansicht eines Wabenkörpers mit einem Vlies;
- Fig. 5:: eine weitere Ausführungsvariante eines Wabenkörpers mit einem Vlies; und
- Fig. 6:: ein Fahrzeug mit einer Vorrichtung zur Abgasbehandlung.

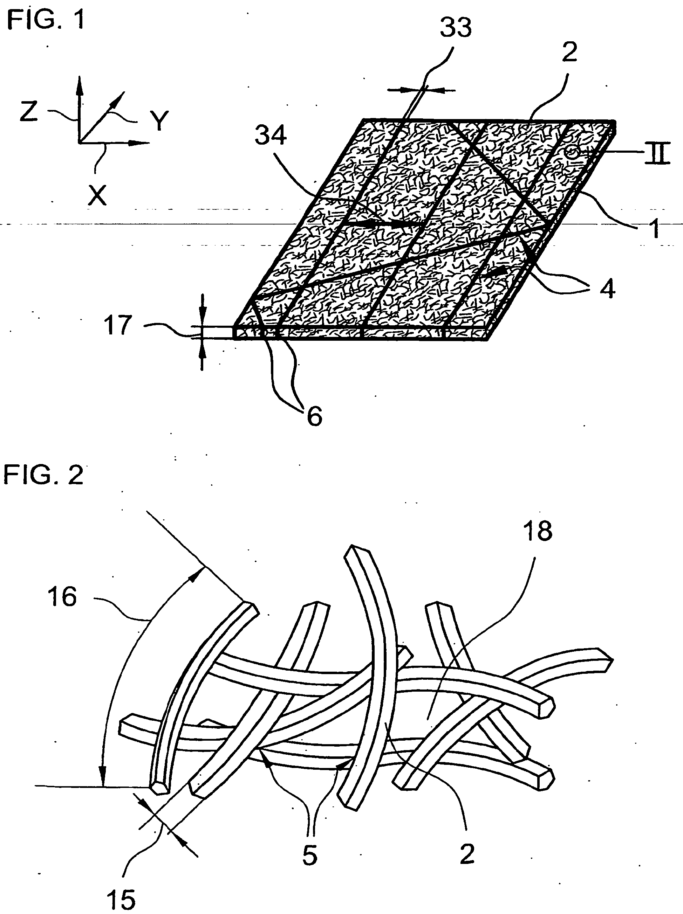

Fig. 1 veranschaulicht schematisch und perspektivisch ein Vlies 1, das mit einer Vielzahl metallischer Drahtfilamente 2 ausgeführt ist. Das Vlies 1 weist erste stoffschlüssige Verbindungen 4 auf, die zusammen einen Verbindungsplan 6 bilden. In der dargestellten Ausführungsvariante ist ein Teil der ersten stoffschlüssigen Verbindungen 4 als parallele Linie, insbesondere Schweißnaht, ausgeführt, wobei dieser Verbindungsplan 6 durch eine "Zick-Zack"-ähnliche Ausgestaltung einer weiteren ersten stoffschlüssigen Verbindung 4 gekreuzt ist. Betrachtet man nun das Vlies in einem Zustand, in dem noch keine zweiten stoffschlüssigen Verbindungen 5 generiert wurden, so weist das Vlies 1 anisotrope Vlieseigenschaften auf. Die Anisotropie ist insbesondere in Richtung der Vliesdicke 17 (Richtung z) oder in der Ebene (Richtung x und Richtung y) verschieden ausgeführt. Ganz besonders bevorzugt ist eine Anisotropie hinsichtlich der Richtungen x und y ausgebildet, so dass das Vlies 1 beispielsweise in Richtung x biegeweich und in Richtung y biegesteif ausgeführt ist. Die dargestellten Schweißnähte können einen Breite von bis zu 100 mm aufweisen, wobei der Abstand der benachbarten Schweißnähte zueinander kleiner als die Breite der Schweißnähte ausgeführt sein kann. Mit Schweißnaht wird eine Zone mit erhöhter Anzahl von stoffschlüssigen Verbindungen beschrieben, insbesondere in einem Vergleich der Lage bzw. des Vlies vor und nach einem Schweißvorgang.

Figur 2 zeigt nun ein Detail des Vlieses aus Figur 1 zu einem Zeitpunkt, wenn bereits zweite stoffschlüssige Verbindungen 5 gebildet wurden. Die zweiten stoffschlüssigen Verbindungen 5 sind bevorzugt als Sinterverbindungen ausgeführt, die sich in Kontaktbereichen der Drahtfilamente 2 ausbilden. Die Drahtfilamente 2 weisen dabei vorteilhafterweise eine Filamentlänge 16 im Bereich von 1 bis 10 mm und einen Filamentdurchmesser 15 im Bereich von 0,02 bis 0,05 auf. In Folge der wirren Anordnung der Drahtfilamente 2 zueinander werden Poren 18 gebildet, die eine Gasdurchlässigkeit des Vlieses 1 ermöglichen. Die Porosität des Vlieses liegt im Bereich von beispielsweise 45% bis 60%. Nach der Ausbildung von ersten stoffschlüssigen Verbindungen 4 und zweiten stoffschlüssigen Verbindungen 5 ist die zuvor vorhandene Anisotropie weniger gering ausgebildet bzw. nicht mehr signifikant. Dabei ist grundsätzlich darauf hinzuweisen, dass sich die Vlieseigenschaften auf das tatsächliche Vlies und nicht auf dessen Verbund mit weiteren, die Steifigkeit beeinflussenden, Komponenten bezieht.

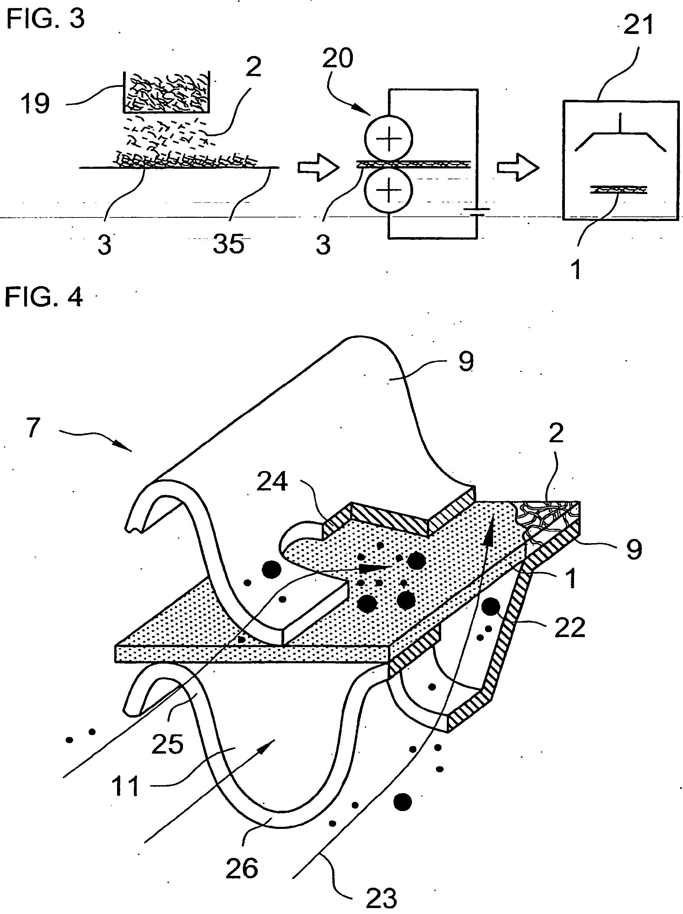

Fig. 3 veranschaulicht eine Ausführungsvariante des Verfahrens zum Herstellen eines Vlieses 1. Dabei werden Drahtfilamente 2 mittels eines Verteilers 19 auf eine Unterlage 35 (ggf. als Förderband ausgeführt) aufgegeben, so dass eine Lage 3 mit Drahtfilamenten 2 gebildet wird. Liegt die gewünschte Zusammensetzung der Lage 3 vor, wird dieser lockere Verbund aus Drahtfilamenten 2 in einem weiteren Schritt mittels eines ersten Fügeverfahrens mit ersten stoffschlüssigen Verbindungen versehen, so dass ein Vlies 1 generiert wird. In der dargestellten Ausführungsvariante wird das Fügeverfahren mittels einer Schweißanlage 20 durchgeführt, wobei die skizzenhafte Darstellung einen Rollnahtschweißprozess zeigt (Widerstandsschweißen). Nachdem nun das Vlies 1 mit anisotropen Vlieseigenschaften gebildet ist, können verschiedene weitere Verfahrensschritte zur Herstellung beispielsweise eines Wabenkörpers durchgeführt werden, bevor schließlich in einem weiteren Verfahrensschritt (rechts dargestellt in Fig. 3) die zweiten stoffschlüssigen Verbindungen 5 erzeugt werden. Dies geschieht in der Darstellung mittels eines Ofens 21, in dem beispielsweise Temperaturen oberhalb von 1.000°C vorliegen, wobei sich zwischen den Drahtfilamenten 2 Sinterverbindungen ausbilden.

Fig. 4 veranschaulicht eine Ausführungsvariante eines Wabenkörpers 7 mit einem Vlies 1. Der Wabenkörper 7 weist eine Vielzahl von Kanälen 11 auf, die für ein Abgas in einer Strömungsrichtung 23 durchströmbar sind. Die Kanäle 11 werden einerseits von einem Vlies 1 und andererseits von Metallfolien 9 begrenzt. Die Metallfolien 9 sind strukturiert mit Wellenbergen 25 und Wellentälern 26 ausgeführt. Zur Beeinflussung der Strömungsrichtung 23 des Abgases bzw. der darin enthaltenen Partikel 22 sind Strömungsbeeinflusser 24 vorgesehen, die in innere Bereiche der Kanäle 11 hineinragen. Damit wird ein Teil des Abgases hin zum Vlies 1 abgelenkt, wobei sich die Partikel 22 an den Drahtfilamenten 2 des Vlieses 1 anlagern.

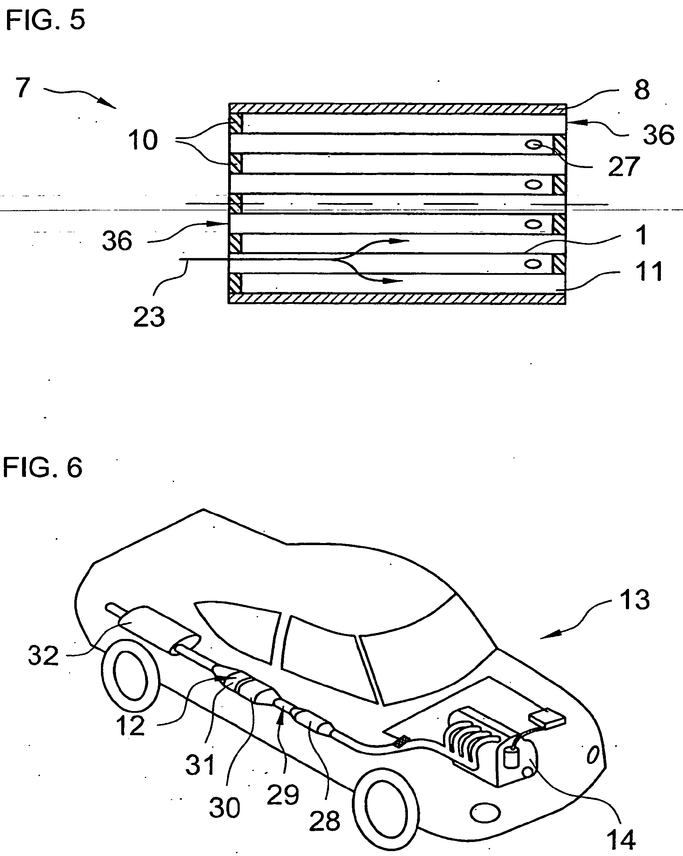

Eine weitere Ausgestaltung eines Wabenkörpers 7 als so genannter "wall-flow filter" ist in Fig. 5 dargestellt. Dieser Wabenkörper 7 hat ebenfalls eine Mehrzahl von Kanälen 11, wobei diese wechselseitig verschlossen sind. Die Kanäle 11 wiederum sind wenigstens teilweise mit einem Vlies 1 gebildet, wobei Abgas in einer Strömungsrichtung 23 in innere Bereiche des Wabenkörpers 7 eintreten kann und infolge der Platzierung von Verbindungselementen 10 an den Stirnseiten 36 gezwungen wird, vollständig das Vlies 1 zu durchdringen. Um hierbei ein Verstopfen zu vermeiden, können Öffnungen 27 im Vlies 1 vorgesehen sein, die eine Art Bypass darstellen, wenn die Vliese 1 aufgrund eines hohen Anteils an eingelagerten Partikeln einen zu hohen Strömungswiderstand für das Abgas darstellen. Dieser Wabenkörper 7 ist in einem metallischen Gehäuse 8 angeordnet und bevorzugt mit diesem verlötet.

Fig. 6 veranschaulicht schließlich einen bevorzugten Einssatzzweck des Vlieses 1 bzw. des Wabenkörpers 7. Dargestellt ist ein Kraftfahrzeug 13 mit einer Verbrennungskraftmaschine 14. Die Verbrennungskraftmaschine 14 erzeugt ein Abgas, welches mittels des dargestellten Abgassystems 29 zumindest teilweise gereinigt wird. Dazu durchströmt das Abgas zunächst einen Vorkatalysator 28. Anschließend durchströmt es einen Oxidationskatalysator 30 und eine Vorrichtung 12 zur Abgasbehandlung die hier als Partikelfalle 31 ausgeführt ist. Die Kombination eines Oxidationskatalysators 30 und einer Partikelfalle 31 ermöglicht durch die Bereitstellung von Stickoxiden eine kontinuierliche Regeneration der Partikelfalle 31, so dass auf ein thermisches Regenerieren, also ein Abbrennen von Rußbestandteilen, gegebenenfalls verzichtet werden kann. Anschließend strömt das Abgas noch hin zu einem Schalldämpfer 32, bevor es das Abgassystem 29 verlässt.

### Bezugszeichenliste

- 1: Vlies
- 2: Drahtfilament
- 3: Lage
- 4: erste Verbindung
- 5: zweite Verbindung
- 6: Verbindungsplan
- 7: Wabenkörper
- 8: Gehäuse
- 9: Metallfolie
- 10: Verbindungselement
- 11: Kanal
- 12: Vorrichtung
- 13: Fahrzeug
- 14: Verbrennungskraftmaschine
- 15: Filamentdurchmesser
- 16: Filamentlänge
- 17: Vliesdicke
- 18: Pore
- 19: Verteiler
- 20: Schweißanlage
- 21: Ofen
- 22: Partikel
- 23: Strömungsrichtung
- 24: Strömungsbeeinflusser
- 25: Wellenberg
- 26: Wellental
- 27: Öffnung
- 28: Vorkatalysator
- 29: Abgassystem
- 30: Oxidationskatalysator
- 31: Partikelfalle
- 32: Schalldämpfer
- 33: Breite
- 34: Abstand
- 35: Unterlage
- 36: Stirnseite

## Patentansprüche

1. Verfahren zur Herstellung eines Vlieses (1) umfassend metallische Drahtfilamente (2) mit zumindest folgenden Schritten:
a) Bilden einer Lage (3) mit Drahtfilamenten (2). wobei noch keine stoffschlüssigen Verbindungen der Drahtfilamente (2) vorliegen;
b) Erzeugen von ersten stoffschlüssigen Verbindungen (4) zwischen zumindest einem Teil-der metallischen Drahtfilamente (2) mit einem ersten Fügeverfahren;
c) Erzeugen von zweiten stoffschlüssigen Verbindungen (5) zwischen metallischen Drahtfilamenten (2) mit einem zweiten Fügeverfahren.

2. Verfahren nach Anspruch 1, bei dem zur Durchführung von Schritt b) als erstes Fügeverfahren ein Schweißverfahren eingesetzt wird.

3. Verfahren nach Anspruch 1 oder 2, bei dem zur Durchführung von Schritt c) als zweites Fügeverfahren eine Hochtemperaturbehandlung des Vlieses (1) zur Ausbildung von Sinterverbindungen eingesetzt wird.

4. Verfahren nach einem der vorhergehenden Ansprüche, bei dem Schritt b) das Ausbilden eines Verbindungsplanes (6) umfasst, so dass mindestens eine anisotrope Vlieseigenschaft erzeugt wird.

5. Verfahren nach einem der vorhergehenden Ansprüche, bei dem zwischen Schritt b) und Schritt c) mindestens einer der folgenden Schritte durchgeführt wird:
- Transportieren des Vlieses (1),
- Umformen des Vlieses (1),
- Beschichten des Vlieses (1).

6. Verfahren zur Herstellung eines Wabenkörpers (7) aufweisend zumindest ein Vlies (1) mit einer Vielzahl metallsicher Drahtfilamente (2), welches zumindest folgende Schritte umfasst:
w) Bilden einer Lage (3) aus Drahtfilamenten (2), wobei noch keine stoffschlüssigen Verbindungen der Drahtfilamente (2) vorliegen:
x) Erzeugen von ersten stoffschlüssigen Verbindungen (4) zwischen zumindest einem Teil der metallischen Drahtfilamente (2) mit einem ersten Fügeverfahren zur Bildung eines Vlieses (1);
y) Anordnen des mindestens einens Vlieses (1) zu einem Wabenkörper (7);
z) Erzeugen von zweiten stoffschlüssigen Verbindungen (5) zwischen metallischen Drahtfilamenten (2) mit einem zweiten Fügeverfahren.

7. Verfahren nach Anspruch 6, bei dem Schritt y) den Zusammenbau des mindestens einen Vlieses (1) mit anderen metallischen Komponenten (8, 9, 10) umfasst und während Schritt z) stoffschlüssige Verbindungen zwischen zumindest einem Teil der Komponenten (1, 8, 9, 10) ausgebildet werden.

8. Verfahren nach Anspruch 6 oder 7, bei dem Schritt z) einen Lötprozess bei Temperaturen oberhalb von 800°C unter Vakuum umfasst.

## Claims

1. Process for producing a fleece (1) comprising metallic wire filaments (2), using at least the following steps:
a) forming a layer (3) comprising wire filaments (2), without any cohesive connections yet being present between the wire filaments (2);
b) producing first cohesive connections (4) between at least some of the metallic wire filaments (2) using a first joining process;
c) producing second cohesive connections (5) between metallic wire filaments (2) using a second joining process.

2. Process according to Claim 1, in which a welding process is used as first joining process to carry out step b).

3. Process according to Claim 1 or 2, in which a high-temperature treatment of the fleece (1) to form sintered connections is used as second joining process to carry out step c).

4. Process according to one of the preceding claims, in which step b) comprises forming a connection plan (6), so that at least one anisotropic fleece property is produced.

5. Process according to one of the preceding claims, in which at least one of the following steps is carried out between step b) and step c):
- transporting the fleece (1),
- deforming the fleece (1),
- coating the fleece (1).

6. Process for producing a honeycomb body (7) having at least one fleece (1) comprising a multiplicity of metallic wire filaments (2), which comprises at least the following steps:
w) forming a layer (3) of wire filaments (2), without any cohesive connections yet being present between the wire filaments (2);
x) producing first cohesive connections (4) between at least some of the metallic wire filaments (2) using a first joining process to form a fleece (1) ;
y) arranging the at least one fleece (1) so as to form a honeycomb body (7);
z) producing second cohesive connections (5) between metallic wire filaments (2) using a second joining process.

7. Process according to Claim 6, in which step y) comprises assembling the at least one fleece (1) with other metallic components (8, 9, 10), and during step z) cohesive connections are formed between at least some of the components (1, 8, 9, 10).

8. Process according to Claim 6 or 7, in which step z) comprises a soldering process carried out at temperatures above 800°C and under vacuum.

## Revendications

1. Procédé de fabrication d'un non-tissé (1) comprenant des filaments métalliques (2), comprenant au moins les étapes suivantes .
a) la formation d'une couche (3) de filaments (2), aucune liaison par accouplement de matière des filaments (2) n'existant encore ;
b) la génération de premières liaisons par accouplement de matière (4) entre au moins une partie des filaments métalliques (2) avec un premier procédé de jonction ;
c) la génération de secondes liaisons par accouplement de matière (5) entre les filaments métalliques (2) avec un second procédé de jonction.

2. Procédé selon la revendication 1, dans lequel un procédé de soudage est utilisé en tant que premier procédé de jonction pour la réalisation de l'étape b).

3. Procédé selon la revendication 1 ou 2, dans lequel un traitement à température élevée du non-tissé (1) pour la formation de liaisons de frittage est utilisé en tant que second procédé de jonction pour la réalisation de l'étape c).

4. Procédé selon l'une quelconque des revendications précédentes, dans lequel l'étape b) comprend la formation d'un plan de liaison (6), de manière à générer au moins une propriété anisotrope du non-tissé.

5. Procédé selon l'une quelconque des revendications précédentes, dans lequel au moins une des étapes suivantes est réalisée entre l'étape b) et l'étape c) :
- le transport du non-tissé (1),
- le façonnage du non-tissé (1),
- le revêtement du non-tissé (1).

6. Procédé de fabrication d'un corps alvéolaire (7) comprenant au moins un non-tissé (1) qui contient une pluralité de filaments métalliques (2), qui comprend au moins les étapes suivantes :
w) la formation d'une couche (3) de filaments (2), aucune liaison par accouplement de matière des filaments (2) n'existant encore ;
x) la génération de premières liaisons par accouplement de matière (4) entre au moins une partie des filaments métalliques (2) avec un premier procédé de jonction pour la formation d'un non-tissé (1) ;
y) l'agencement dudit au moins un non-tissé (1) en un corps alvéolaire (7) ;
z) la génération de secondes liaisons par accouplement de matière (5) entre les filaments métalliques (2) avec un second procédé de jonction.

7. Procédé selon la revendication 6, dans lequel l'étape y) comprend l'assemblage dudit au moins un non-tissé (1) avec d'autres composants métalliques (8, 9, 10) et, pendant l'étape z), des liaisons par accouplement de matière sont formées entre au moins une partie des composants (1, 8, 9, 10).

8. Procédé selon la revendication 6 ou 7, dans lequel l'étape z) comprend un procédé de brasage à des températures supérieures à 800 °C sous vide.
